# EUROPEAN PATENT APPLICATION

(11) **EP 4 657 919 A2**
(43) Date of publication of application: **03.12.2025**
(21) Application number: 25209083.2
(22) Date of filing: 11.06.2021
(51) Int. Cl.: H04W 28/02

(54) **ACCESS POINT, STATION, AND WIRELESS COMMUNICATION METHOD**

(62) Divisional of application: 21944653.1
(71) Applicant: GUANGDONG OPPO MOBILE TELECOMMUNICATIONS CORP., LTD., Dongguan, Guangdong 523860 (CN)
(72) Inventor: LU, Liuming, No.18 Haibin Road Wusha,Chang'an Dongguan,Guangdon, 523860 (CN); HUANG, Lei, No.18 Haibin Road Wusha,Chang'an Dongguan,Guangdon, 523860 (CN); LUO, Chaoming, No.18 Haibin Road Wusha,Chang'an Dongguan,Guangdon, 523860 (CN); ZHOU, Pei, No.18 Haibin Road Wusha,Chang'an Dongguan,Guangdon, 523860 (CN)
(74) Representative: Penza, Giancarlo

(57) **Abstract**

An access point (AP), a station (STA), and a wireless communication method are provided. The wireless communication method includes determining, by an AP, a criterion for latency sensitive traffic and determining, by the AP, one or more traffic stream identifiers (TSIDs) for TS-based latency sensitive traffic comprising a TS with a particular traffic specification (TSPEC), wherein the TSPEC comprises extended parameters. The wireless communication method further includes setting up, by the AP, a restricted target wake time (TWT) for the one or more TSIDs. This can issues in the prior art, support a TS operation for latency sensitive traffic, provide good communication performance, and/or provide high reliability.

## Description

### TECHNICAL FIELD

The present disclosure relates to the field of communication systems, and more particularly, to an access point (AP), a station (STA), and a wireless communication method, which can provide a good communication performance and/or provide high reliability.

### BACKGROUND

Communication systems such as wireless communication systems are widely deployed to provide various types of communication content such as voice, video, packet data, messaging, broadcast, and so on. These communication systems may be multiple-access systems capable of supporting communication with multiple users by sharing available system resources (such as, time, frequency, and power). A wireless network, for example a wireless local area network (WLAN), such as a Wi-Fi (institute of electrical and electronics engineers (IEEE) 802.11) network may include an access point (AP) that may communicate with one or more stations (STAs) or mobile devices. The WLAN enables a user to wirelessly access an internet based on radio frequency technology in a home, an office, or a specific service area using a portable terminal such as a personal digital assistant (PDA), a laptop computer, a portable multimedia player (PMP), a smartphone, etc. The AP may be coupled to a network, such as the internet, and may enable a mobile device to communicate via the network (or communicate with other devices coupled to the AP). A wireless device may communicate with a network device bi-directionally. For example, in a WLAN, a STA may communicate with an associated AP via downlink and uplink. The downlink may refer to a communication link from the AP to the STA, and the uplink may refer to a communication link from the STA to the AP.

Target wake times (TWTs) have been initially designed to manage activity in a basic service set (BSS) by scheduling STAs to reduce a required amount of time that a STA needs to be awake for a power management of STAs. IEEE 802.11be introduces a restricted TWT (R-TWT) operation which provides more predictable latency with higher reliability for latency sensitive traffic based on TWT. The latency sensitive traffic can be identified by traffic identifiers (TIDs) with corresponding traffic categories (TCs) or user priorities (UPs), and the latency sensitive traffic can also be identified by TSID as a traffic stream (TS) with a particular traffic specification (TSPEC) for parameterized quality of service (QoS). Currently 802.11be has not defined enough parameters in TSPEC element for the latency sensitive traffic. Further, a restricted TWT setup mechanism to support the TS operation for the latency sensitive traffic needs to be defined.

Therefore, there is a need for an access point (AP), a station (STA), and a wireless communication method, which can solve issues in the prior art, support a TS operation for latency sensitive traffic, provide good communication performance, and/or provide high reliability.

### SUMMARY

An object of the present disclosure is to propose an access point (AP), a station (STA), and a wireless communication method, which can solve issues in the prior art, support a TS operation for latency sensitive traffic, provide good communication performance, and/or provide high reliability.

In a first aspect of the present disclosure, a wireless communication method comprises determining, by an access point (AP), a criterion for latency sensitive traffic and determining, by the AP, one or more traffic stream identifiers (TSIDs) for TS-based latency sensitive traffic comprising a TS with a particular traffic specification (TSPEC), wherein the TSPEC comprises extended parameters.

In a second aspect of the present disclosure, a wireless communication method comprises determining, by a station (STA), a criterion for latency sensitive traffic and determining, by the STA, one or more traffic stream identifiers (TSIDs) for TS-based latency sensitive traffic comprising a TS with a particular traffic specification (TSPEC), wherein the TSPEC comprises extended parameters.

In a third aspect of the present disclosure, an access point (AP) comprises a memory, a transceiver, and a processor coupled to the memory and the transceiver. The processor is configured to determine a criterion for latency sensitive traffic and determine one or more traffic stream identifiers (TSIDs) for TS-based latency sensitive traffic comprising a TS with a particular traffic specification (TSPEC), wherein the TSPEC comprises extended parameters.

In a fourth aspect of the present disclosure, a station (STA) comprises a memory, a transceiver, and a processor coupled to the memory and the transceiver. The processor is configured to determine a criterion for latency sensitive traffic and determine one or more traffic stream identifiers (TSIDs) for TS-based latency sensitive traffic comprising a TS with a particular traffic specification (TSPEC), wherein the TSPEC comprises extended parameters.

In a fifth aspect of the present disclosure, a non-transitory machine-readable storage medium has stored thereon instructions that, when executed by a computer, cause the computer to perform the above method.

In a sixth aspect of the present disclosure, a chip includes a processor, configured to call and run a computer program stored in a memory, to cause a device in which the chip is installed to execute the above method.

In a seventh aspect of the present disclosure, a computer readable storage medium, in which a computer program is stored, causes a computer to execute the above method.

In an eighth aspect of the present disclosure, a computer program product includes a computer program, and the computer program causes a computer to execute the above method.

In a ninth aspect of the present disclosure, a computer program causes a computer to execute the above method.

### BRIEF DESCRIPTION OF DRAWINGS

In order to illustrate the embodiments of the present disclosure or related art more clearly, the following figures will be described in the embodiments are briefly introduced. It is obvious that the drawings are merely some embodiments of the present disclosure, a person having ordinary skill in this field can obtain other figures according to these figures without paying the premise.
FIG. 1 is a schematic diagram illustrating an example of a wireless communications system according to an embodiment of the present disclosure.
FIG. 2 is a block diagram of one or more stations (STAs) and an access point (AP) of communication in a wireless communications system according to an embodiment of the present disclosure.
FIG. 3 is a flowchart illustrating a wireless communication method performed by an AP according to an embodiment of the present disclosure.
FIG. 4 is a flowchart illustrating a wireless communication method performed by a STA according to another embodiment of the present disclosure.
FIG. 5 is a schematic diagram illustrating an example of a format of a particular traffic specification (TSPEC) element with extended parameters according to an embodiment of the present disclosure.
FIG. 6 is a schematic diagram illustrating an example of a format of TS information field with extended parameters according to an embodiment of the present disclosure.
FIG. 7 is a schematic diagram illustrating an example of a latency sensitive traffic criterion element according to an embodiment of the present disclosure.
FIG. 8 is a schematic diagram illustrating an example of a format of a broadcast target wake time (TWT) parameter set field with TSID-based parameters according to an embodiment of the present disclosure.
FIG. 9 is a schematic diagram illustrating an example of a TS-based TWT update field format with TSPEC-based parameters according to an embodiment of the present disclosure.
FIG. 10 is a schematic diagram illustrating an example of a TS-based TWT update field format with TSID-based parameters according to an embodiment of the present disclosure.
FIG. 11 is a schematic diagram illustrating an example of TS-based TWT update field format with TSPEC-based parameters according to an embodiment of the present disclosure.
FIG. 12 is a schematic diagram illustrating an example of a restricted TWT (R-TWT) setup based on an R-TWT element with TSID-based parameters and an R-TWT update using TS-based TWT update frames according to an embodiment of the present disclosure.
FIG. 13 is a schematic diagram illustrating an example of a R-TWT Setup based on R-TWT element with TSPEC -based parameters and R-TWT update using TS-based TWT update frames according to an embodiment of the present disclosure.
FIG. 14 is a schematic diagram illustrating an example of an R-TWT setup and update based on an R-TWT element with TSID-based parameters according to an embodiment of the present disclosure.
FIG. 15 is a schematic diagram illustrating an example of an R-TWT setup and update based on an R-TWT element with TSID-based parameters according to another embodiment of the present disclosure.
FIG. 16 is a schematic diagram illustrating an example of an R-TWT setup based on an R-TWT element with TSPEC-based parameters and an R-TWT update using TS-based TWT update frames according to an embodiment of the present disclosure.
FIG. 17 is a schematic diagram illustrating an example of an R-TWT setup based on an R-TWT element with TSID-based parameters and an R-TWT update using a TS-based TWT information frame according to an embodiment of the present disclosure.
FIG. 18 is a block diagram of a system for wireless communication according to an embodiment of the present disclosure.

### DETAILED DESCRIPTION OF EMBODIMENTS

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

The following table includes some abbreviations, which may be used in some embodiments of the present disclosure:

| Abbreviation | Full name |
|---|---|
| AP | Access Point |
| LL | Low Latency |
| TWT | Target Wake Time |
| R-TWT | Restricted TWT |
| SCS | Stream classification service |
| SP | Service Period |
| STA | Station |
| TID | Traffic identifier |
| TS | Traffic Stream |
| TSID | Traffic Stream Identifier |
| TSPEC | traffic specification |
| MLD | Multi-Link Device |

### TWT setup procedure:

An AP which supports a TWT operation transmits a TWT element to a station (STA) that is associated to an AP and from which it received a frame containing a TWT element that contained a value of Request TWT, Suggest TWT or Demand TWT in a TWT Setup Command field and with a TWT Request field equal to 1. A transmitted TWT element is included in a frame that is an appropriate response frame to a received frame. The AP includes a value of Accept TWT, Alternate TWT, Dictate TWT, or Reject TWT in the TWT Setup Command field of the response. A TWT scheduling AP includes a broadcast TWT element in a Beacon frame that indicates a broadcast TWT SP during which the AP intends to send Trigger frames or DL BUs to TWT scheduled STAs. STA 1 and STA 2 wake to receive the Beacon frame to determine the broadcast TWT. The following reference is incorporated in some embodiments of the present disclosure by reference in its entirety: IEEE 802.11ax 8.0.

### Restricted TWT:

TWT operation allows an AP to use enhanced medium access protection and resource reservation mechanisms to provide more predictable latency, reduced worst case latency, and/or jitter, with higher reliability for latency sensitive traffic. A restricted TWT agreement is established using the same procedure used to set up a broadcast TWT agreement as described in 26.8.3 (Broadcast TWT operation) except that the TWT setup frames contain a broadcast TWT element that includes a Restricted TWT Parameter Set field as described in 9.4.2.199 (TWT element). A restricted TWT scheduling AP, referred to as an r-TWT scheduling AP, is an EHT AP that supports restricted TWT operation and sets the Restricted TWT Support subfield in transmitted EHT Capabilities elements to 1. A restricted TWT scheduled STA, referred to as an r-TWT scheduled STA, is a non-AP EHT STA that supports restricted TWT operation and sets the Restricted TWT Support subfield in transmitted EHT Capabilities elements to 1. When included in an individually addressed TWT Setup frame transmitted by an r-TWT scheduling AP or r-TWT scheduled STA, the Restricted TWT Traffic Info Present subfield of the Broadcast TWT Info field shall be set to 1. The following references are incorporated in some embodiments of the present disclosure by reference in its entireties: 11-21-0142-08-00be-pdt-mac-restricted-twt and 11-21-0462-09-00be-pdt-mac-restricted-twt-tbds-crs-part1.

The following description is directed to certain implementations for the purposes of describing the innovative aspects of the present disclosure. However, a person having ordinary skill in the art will readily recognize that the teachings herein can be applied in a multitude of different ways. The described implementations may be implemented in any device, system, or network that is capable of transmitting and receiving radio frequency (RF) signals according to any of the IEEE 802.11 standards, the Bluetooth^{®} standard, code division multiple access (CDMA), frequency division multiple access (FDMA), time division multiple access (TDMA), global system for mobile communications (GSM), GSM/general packet radio service (GPRS), enhanced data GSM environment (EDGE), terrestrial trunked radio (TETRA), wideband-CDMA (W-CDMA), evolution data optimized (EV-DO), 1×EV-DO, EV-DO Rev A, EV-DO Rev B, high speed packet access (HSPA), high speed downlink packet access (HSDPA), high speed uplink packet access (HSUPA), evolved high speed packet access (HSPA+), long term evolution (LTE), AMPS, or other known signals that are used to communicate within a wireless, cellular or internet of things (IOT) network, such as a system utilizing 3G, 4G, or 5G, or further implementations thereof, technology.

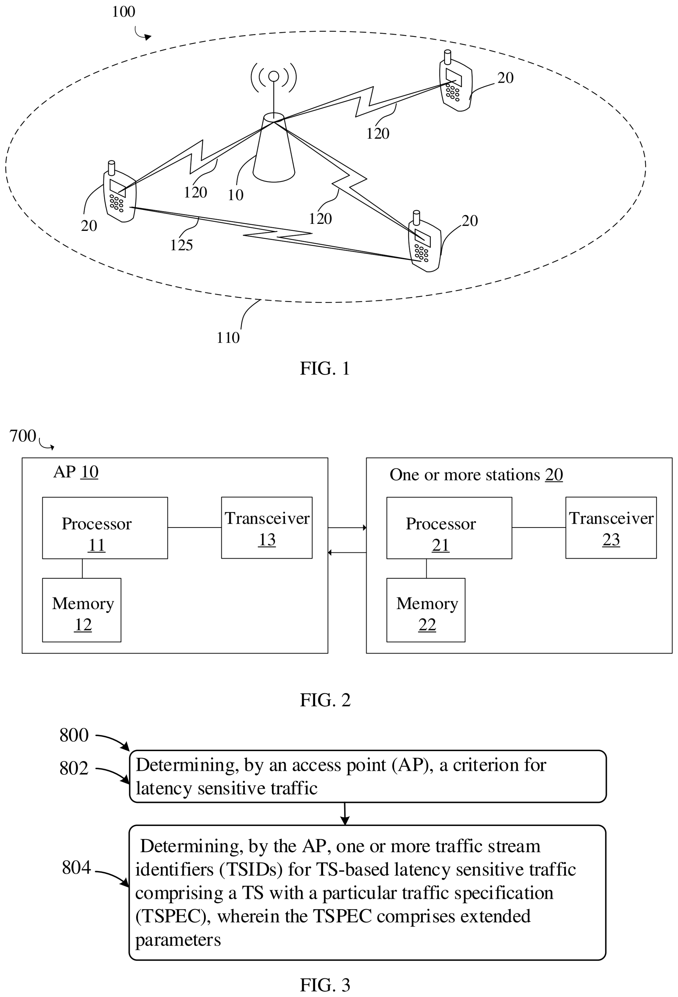

FIG. 1 illustrates an example of a wireless communications system according to an embodiment of the present disclosure. The wireless communications system may be an example of a wireless local area network (WLAN) 100 (also known as a Wi-Fi network) (such as next generation, next big thing (NBT), ultra-high throughput (UHT) or EHT Wi-Fi network) configured in accordance with various aspects of the present disclosure. As described herein, the terms next generation, NBT, UHT, and EHT may be considered synonymous and may each correspond to a Wi-Fi network supporting a high volume of space-time-streams. The WLAN 100 may include an AP 10 and multiple associated STAs 20, which may represent devices such as mobile stations, personal digital assistant (PDAs), other handheld devices, netbooks, notebook computers, tablet computers, laptops, display devices (such as TVs, computer monitors, etc.), printers, etc. The AP 10 and the associated stations 20 may represent a basic service set (BSS) or an extended service set (ESS). The various STAs 20 in the network can communicate with one another through the AP 10. Also illustrated is a coverage area 110 of the AP 10, which may represent a basic service area (BSA) of the WLAN 100. An extended network station (not shown) associated with the WLAN 100 may be connected to a wired or wireless distribution system that may allow multiple APs 10 to be connected in an ESS.

In some embodiments, a STA 20 may be located in the intersection of more than one coverage area 110 and may associate with more than one AP 10. A single AP 10 and an associated set of STAs 20 may be referred to as a BSS. An ESS is a set of connected BSSs. A distribution system (not shown) may be used to connect APs 10 in an ESS. In some cases, the coverage area 110 of an AP 10 may be divided into sectors (also not shown). The WLAN 100 may include APs 10 of different types (such as a metropolitan area, home network, etc.), with varying and overlapping coverage areas 110. Two STAs 20 also may communicate directly via a direct wireless link 125 regardless of whether both STAs 20 are in the same coverage area 110. Examples of direct wireless links 120 may include Wi-Fi direct connections, Wi-Fi tunneled direct link setup (TDLS) links, and other group connections. STAs 20 and APs 10 may communicate according to the WLAN radio and baseband protocol for physical and media access control (MAC) layers from IEEE 802.11 and versions including, but not limited to, 802.11b, 802.11g, 802.11a, 802.11n, 802.11ac, 802.11ad, 802.11ah, 802.11ax, 802.11ay, etc. In some other implementations, peer-to-peer connections or ad hoc networks may be implemented within the WLAN 100.

FIG. 2 illustrates one or more stations (STAs) 20 and an access point (AP) 10 of communication in a wireless communications system 700 according to an embodiment of the present disclosure. FIG. 2 illustrates that, the wireless communications system 700 includes an access point (AP) 10 and one or more stations (STAs) 20. The AP 10 may include a memory 12, a transceiver 13, and a processor 11 coupled to the memory 12, the transceiver 13. The one or more STAs 20 may include a memory 22, a transceiver 23, and a processor 21 coupled to the memory 22, the transceiver 23. The processor 11 or 21 may be configured to implement proposed functions, procedures and/or methods described in this description. Layers of radio interface protocol may be implemented in the processor 11 or 21. The memory 12 or 22 is operatively coupled with the processor 11 or 21 and stores a variety of information to operate the processor 11 or 21. The transceiver 13 or 23 is operatively coupled with the processor 11 or 21, and the transceiver 13 or 23 transmits and/or receives a radio signal.

The processor 11 or 21 may include application-specific integrated circuit (ASIC), other chipset, logic circuit and/or data processing device. The memory 12 or 22 may include read-only memory (ROM), random access memory (RAM), flash memory, memory card, storage medium and/or other storage device. The transceiver 13 or 23 may include baseband circuitry to process radio frequency signals. When the embodiments are implemented in software, the techniques described herein can be implemented with modules (e.g., procedures, functions, and so on) that perform the functions described herein. The modules can be stored in the memory 12 or 22 and executed by the processor 11 or 21. The memory 12 or 22 can be implemented within the processor 11 or 21 or external to the processor 11 or 21 in which case those can be communicatively coupled to the processor 11 or 21 via various means as is known in the art.

In some embodiments, the processor 11 is configured to determine a criterion for latency sensitive traffic and determine one or more traffic stream identifiers (TSIDs) for TS-based latency sensitive traffic comprising a TS with a particular traffic specification (TSPEC), wherein the TSPEC comprises extended parameters. An AP refers to a single AP or an AP affiliated with an AP MLD, and a non-AP STA refers to a single non-AP STA or a non-AP STA affiliated with a non-AP MLD in some embodiments. This can solve issues in the prior art, support a TS operation for latency sensitive traffic, provide good communication performance, and/or provide high reliability.

In some embodiments, the processor 21 is configured to determine a criterion for latency sensitive traffic and determine one or more traffic stream identifiers (TSIDs) for TS-based latency sensitive traffic comprising a TS with a particular traffic specification (TSPEC), wherein the TSPEC comprises extended parameters. An AP refers to a single AP or an AP affiliated with an AP MLD, and a non-AP STA refers to a single non-AP STA or a non-AP STA affiliated with a non-AP MLD in some embodiments. This can solve issues in the prior art, support a TS operation for latency sensitive traffic, provide good communication performance, and/or provide high reliability.

FIG. 3 illustrates a wireless communication method 800 performed by an AP according to an embodiment of the present disclosure. In some embodiments, the method 800 includes: a block 802, determining, by an access point (AP), a criterion for latency sensitive traffic, and a block 804, determining, by the AP, one or more traffic stream identifiers (TSIDs) for TS-based latency sensitive traffic comprising a TS with a particular traffic specification (TSPEC), wherein the TSPEC comprises extended parameters. An AP refers to a single AP or an AP affiliated with an AP MLD, and a non-AP STA refers to a single non-AP STA or a non-AP STA affiliated with a non-AP MLD in some embodiments. This can solve issues in the prior art, support a TS operation for latency sensitive traffic, provide good communication performance, and/or provide high reliability.

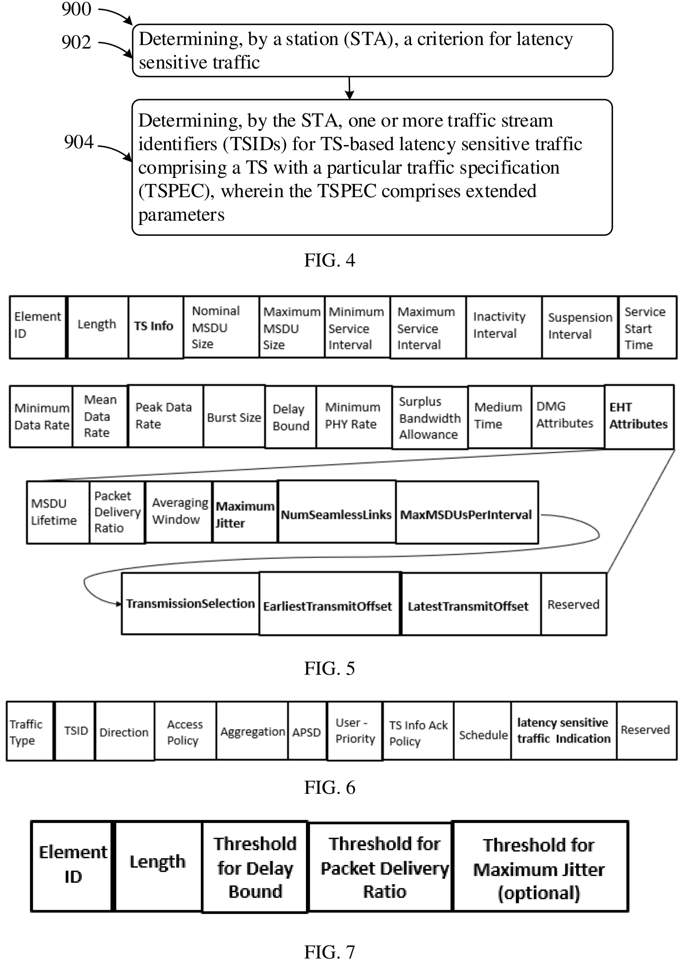

FIG. 4 illustrates a wireless communication method 900 performed by a STA according to an embodiment of the present disclosure. In some embodiments, the method 900 includes: a block 902, determining, by a station (STA), a criterion for latency sensitive traffic, and a block 904, determining, by the STA, one or more traffic stream identifiers (TSIDs) for TS-based latency sensitive traffic comprising a TS with a particular traffic specification (TSPEC), wherein the TSPEC comprises extended parameters. An AP refers to a single AP or an AP affiliated with an AP MLD, and a non-AP STA refers to a single non-AP STA or a non-AP STA affiliated with a non-AP MLD in some embodiments. This can solve issues in the prior art, support a TS operation for latency sensitive traffic, provide good communication performance, and/or provide high reliability.

In some embodiments, the extended parameters for a TSPEC element comprises at least one of the followings: a maximum jitter; NumSeamlessLinks; MaxMSDUsPerInterval; TransmissionSelection; EarliestTransmitOffset; LatestTransmitOffset; or a latency sensitive traffic indication. In some embodiments, the maximum jitter comprises an unsigned integer that defines a maximum amount of time, in microseconds, allowed for delay variation to transport two sequential medium access control (MAC) service data units (MSDUs) or aggregated MSDUs (A-MSDUs) belonging to the TS in the TSPEC element; the NumSeamlessLinks defines a number of links to deliver a seamless redundancy for the TS; the MaxMSDUsPerInterval defines a maximum number of the MSDUs or the A-MSDUs belonging to the TS in one service interval; the TransmissionSelection defines a mechanism that is used to transmit a stream traffic class; the EarliestTransmitOffset defines an earliest offset within a service interval at which a transmitter is capable of starting to transmit frames; the LatestTransmitOffset defines a latest offset within the service interval at which the transmitter is capable of starting to transmit the frames; or a subfield of the latency sensitive traffic indication indicates whether the TS represented by the TSPEC element is a stream for latency sensitive traffic.

In some embodiments, if a value zero of the maximum jitter is interpreted as one, there is no seamless redundancy; if no mechanism that differentiates the latency sensitive traffic from other traffic is applied, a value of the latency sensitive traffic is zero or if the mechanism that differentiates the latency sensitive traffic from other traffic is applied, the value of the latency sensitive traffic is zero; the EarliestTransmitOffset is defined as an integer number of nanoseconds; the LatestTransmitOffset is defined as an integer number of nanoseconds; or when a value of the latency sensitive traffic is set to one, the latency sensitive traffic indication indicates that the TS represented by the TSPEC element is the stream for latency sensitive traffic or when a value of the latency sensitive traffic is set to zero, the latency sensitive traffic indication indicates that the TS represented by the TSPEC element is not the stream for latency sensitive traffic. In some embodiments, the wireless communication method further comprises determining, by the AP, an addition of a latency sensitive traffic criterion element, wherein the addition of the latency sensitive traffic criterion element is used to determine whether the TS with specific TEPEC parameters can be identified as the latency sensitive traffic by the AP and/or a non-AP station (STA).

In some embodiments, the AP is configured to receive, from the non-AP STA, a request with the latency sensitive traffic criterion element comprising values of related parameters in the latency sensitive traffic criterion element. In some embodiments, the AP is configured to announce the latency sensitive traffic criterion element contained in a transmitted beacon, probe response frames, association and/or reassociation frames, and/or management frames, comprising parameters to differentiate the latency sensitive traffic. In some embodiments, for the TS with the specific TEPEC parameters, if at least one of following conditions are met, the TS is identified as the latency sensitive traffic, or otherwise the TS is not identified as the latency sensitive traffic; wherein the at least one of following conditions comprises a delay bound defined in a delay bound field is less than or equal to a threshold for a delay bound defined in a threshold for delay bound field; a packet delivery ratio defined in a packet delivery ratio field is greater than or equal to a threshold for the packet delivery ratio defined in a threshold for the packet delivery ratio field; or a maximum jitter defined in a maximum jitter field is less than or equal to a threshold for maximum jitter defined in a threshold for the maximum jitter field if the threshold for the maximum jitter field of the latency sensitive traffic criterion element is present and has a valid value, or otherwise a condition can be ignored if the threshold for the maximum jitter field of the latency sensitive traffic criterion element is not present or has no valid value.

In some embodiments, the threshold for the delay bound field is 4 octets long and contains an unsigned integer that defines the threshold for the delay bound; the threshold for the packet delivery ratio field indicates a threshold for a percentage of packets that are expected to be delivered within the threshold for the delay bound defined in the threshold for the delay bound field; or the threshold for the maximum jitter field contains an unsigned integer that defines a threshold for a maximum amount of time, in microseconds, allowed for a delay variation to transport two sequential MSDUs or A-MSDUs belonging to the TS. In some embodiments, the wireless communication method further comprises determining, by the AP, extended parameters for a restricted target wake time (TWT) traffic information field. In some embodiments, the extended parameters for the restricted TWT traffic information field comprises a broadcast TWT parameter set field with TSID-based parameters and/or a broadcast TWT parameter set field with TSPEC-based parameters. In some embodiments, the broadcast TWT parameter set field with the TSID-based parameters comprise a TSID present subfield configured to indicate whether a TSID type field and a TSID bitmap field are present. In some embodiments, when a value of the TSID present subfield is set to 1, the TSID type field and the TSID bitmap field are present, or otherwise the TSID type field and the TSID bitmap field are not present. In some embodiments, the TSID type field and the TSID bitmap field are regarded as one type of the TS-based traffic information field and/or the TSID type field and the TSID bitmap field define which TSID for latency sensitive traffic stream is represented.

In some embodiments, when the TSID type subfield is set to 1, a value of 1 at a bit position k in a bitmap indicates that TSID (k+8) for latency sensitive traffic stream is present, when the TSID type subfield is set to 1, a value of 0 at the bit position k in the bitmap indicates that TSID (k+8) for latency sensitive traffic stream is not present, when the TSID type subfield is set to 0, a value of 1 at the bit position k in the bitmap indicates that TSID k for latency sensitive traffic stream is present, or a value of 0 at the bit position k in the bitmap indicates that TSID k for latency sensitive traffic stream is not present. In some embodiments, the broadcast TWT parameter set field with the TSPEC-based parameters comprise a TSPEC LIST present subfield indicates whether a TSPEC LIST field is present. In some embodiments, when a value of the TSPEC LIST present subfield is set to 1, the TSPEC LIST field is present, or otherwise the TSPEC LIST field is not present. In some embodiments, the TSPEC LIST field is regarded as one type of the TS-based traffic information field and/or the TSPEC LIST field contains one or more TSPEC elements for latency sensitive traffic stream. In some embodiments, the wireless communication method further comprises setting up, by the AP, a restricted TWT for the one or more TSIDs.

In some embodiments, the wireless communication method further comprises determining, by the AP, a restricted TWT setup and/or one or more update mechanisms to support a TS operation. In some embodiments, the restricted TWT setup and/or the one or more update mechanisms are based on a restricted TWT element; and/or the restricted TWT setup and/or the one or more update mechanisms are based on a restricted TWT update frame. In some embodiments, the AP comprises a restricted TWT responding AP, during a TS-based restricted TWT agreement setup and update, a restricted TWT requesting STA and/or the restricted TWT responding AP comprises the restricted TWT element where TSID-based parameters or TSPEC-based parameters indicate the TS for latency sensitive traffic stream contained in restricted TWT setup and update frames. In some embodiments, the restricted TWT responding AP is configured to receive, from the restricted TWT requesting STA, a frame with the restricted TWT element that contained a value of a request TWT, a suggest TWT, or a demand TWT in a TWT setup command field and with the TSID-based parameters or the TSPEC-based parameters.

In some embodiments, upon receiving the frame, the restricted TWT responding AP comprises a value of an accept TWT, an alternate TWT, a dictate TWT, or a reject TWT in the TWT setup command field of a response, which contains the TSID-based parameters or the TSPEC-based parameters for TS-based traffic information. In some embodiments, the AP comprises a restricted TWT scheduling AP, and the restricted TWT scheduling AP is configured to send a unsolicited TWT response to the restricted TWT requesting STA for TS operation. In some embodiments, the unsolicited TWT response comprises a value of an accept TWT, an alternate TWT, a dictate TWT, or a reject TWT in the TWT setup command field of the response, which contains the TSID-based parameters or the TSPEC-based parameters for TS-based traffic information. In some embodiments, the AP comprises a restricted TWT responding AP, during a TS-based restricted TWT agreement update, a restricted TWT requesting STA and the restricted TWT responding AP exchange the restricted TWT update frames containing the TSID-based parameters or the TSPEC-based parameters which indicate the TS for latency sensitive traffic stream for TS operation.

In some embodiments, the restricted TWT setup and/or the one or more update mechanisms based on the restricted TWT update frame comprises TS-based TWT update frames and/or a TS-based TWT information frame. In some embodiments, the TS-based TWT update frames comprise frames for request TWT ADDTS, request TWT DELTS, accept TWT ADDTS, accept TWT DELTS, reject TWT ADDTS, reject TWT DELTS. In some embodiments, the restricted TWT update frames adopt an action frame format. In some embodiments, a STA configured to transmit a TWT element with a TWT update request or response indication subfield equal to 1 is a TWT requesting STA or a TWT scheduled STA, or otherwise, the STA is a TWT responding STA or a TWT scheduling AP. In some embodiments, the wireless communication method further comprises determining, by the AP, a TS-based TWT update command, wherein TWT update for TS operation command subfield values indicate a type of the TWT update for TS operation command. In some embodiments, within a TWT update TS operation field comprising a TS-based TWT update command value of request TWT ADDTS or request TWT DELTS, a TWT ID, if present, indicates a specific TWT for which corresponding TS operation is requested to be done. In some embodiments, the corresponding TS operation comprises TWT ADDTS or TWT DELTS.

In some embodiments, within a TWT update TS operation field comprising a TS-based TWT update command value of accept TWT ADDTS or accept TWT DELTS, a TWT ID, if present, indicates a specific TWT for which corresponding TS operation is accepted to be done as a response to a related request. In some embodiments, the corresponding TS operation comprises TWT ADDTS or TWT DELTS. In some embodiments, within a TWT update TS operation field comprising a TS-based TWT update command value of reject TWT ADDTS or reject TWT DELTS, a TWT ID, if present, indicates a specific TWT for which corresponding TS operation is rejected to be done as a response to the related request. In some embodiments, for the restricted TWT setup and/or the one or more update mechanisms based on the restricted TWT update frame, TS-based traffic information comprises TSID-based parameters of a TSID type field and a TSID bitmap field, or TSPEC-based parameters of a TSPEC LIST field. In some embodiments, the AP is configured to transmit, to a TWT scheduled STA, a TS-based TWT information frame that contains TS-based traffic information considers a transmission of the TS with the TS-based traffic information indicated in TSID-based parameters of a TSID type field and a TSID bitmap field, or TSPEC-based parameters of a TSPEC LIST field of a TWT information frame in a broadcast TWT schedule as suspended and can be resume the transmission of the TS in the broadcast TWT schedule at a first TWT that occurs not earlier than a next TWT subfield value contained in the received TWT information frame.

In some embodiments, the AP is configured to transmit, to a TWT scheduled STA, an acknowledgment in response to a TWT information frame transmitted by the TWT scheduled STA that contains TS-based traffic information considers a transmission of the TS with TS-based traffic information indicated in TSID-based parameters of the TSID type field and the TSID bitmap field, or the TSPEC-based parameters of the TSPEC LIST field of the TWT information frame in the broadcast TWT schedule as suspended and can resume the transmission of the TS in the broadcast TWT schedule at the first TWT that occurs not earlier than the next TWT subfield value contained in the received TWT information frame.

Some embodiments introduce extended parameters for TSPEC element and proposes restricted TWT setup and update mechanisms to support a TS operation for a latency sensitive traffic. An AP refers to a single AP or an AP affiliated with an AP MLD, and a non-AP STA refers to a single non-AP STA or a non-AP STA affiliated with a non-AP MLD in some embodiments.

### Extended parameters for TSPEC element:

FIG. 5 illustrates an example of a format of a particular traffic specification (TSPEC) element with extended parameters according to an embodiment of the present disclosure. The extended parameters for TSPEC element as illustrated in FIG. 5 are described as follows.

Maximum jitter: Maximum jitter contains an unsigned integer that specifies the maximum amount of time, in microseconds, allowed for Delay Variation to transport two sequential MSDU or A-MSDU belonging to the TS in this TSPEC element.

NumSeamlessLinks: NumSeamlessLinks specifies the number of links to deliver seamless redundancy for the TS. The value zero is interpreted as one (i.e., no seamless redundancy).

MaxMSDUsPerInterval: MaxMSDUsPerInterval specifies the maximum number of MSDUs or (where A-MSDU aggregation is employed) A-MSDUs belonging to the TS in one service Interval.

TransmissionSelection: TransmissionSelection specifies the mechanism that is used to transmit this Stream's traffic class. If no mechanism that differentiates latency sensitive traffic from other traffic is applied, the value is zero. If the mechanism that differentiates latency sensitive traffic from other traffic is applied, the value is 1.

EarliestTransmitOffset: EarliestTransmitOffset specifies the earliest offset within the Service Interval at which the transmitter is capable of starting to transmit of its frames. EarliestTransmitOffset is specified as an integer number of nanoseconds.

LatestTransmitOffset: LatestTransmitOffset specifies the latest offset within the Service Interval at which the transmitter is capable of starting to transmit of its frames. LatestTransmitOffset is specified as an integer number of nanoseconds.

Latency sensitive traffic indication: FIG. 6 illustrates an example of a format of TS information field with extended parameters according to an embodiment of the present disclosure. As illustrated in FIG. 6, the latency sensitive traffic Indication subfield indicates whether the TS represented by this TSPEC element is a stream for latency sensitive traffic. When the value is set to 1, it indicates that the TS represented by this TSPEC element is a stream for latency sensitive traffic. When the value is set to 0, it indicates that the TS represented by this TSPEC element is not a stream for latency sensitive traffic.

Addition of Latency Sensitive Traffic Criterion Element:
Latency Sensitive Traffic Criterion Element is used to determine whether the TS with the specific TEPEC parameters can be identified as latency sensitive traffic by AP and Non-AP STA. Non-AP STA can suggest the values of the related parameters in the Latency Sensitive Traffic Criterion Element by sending a request with the element to AP. And the AP can announce Latency Sensitive Traffic Criterion Element contained in transmitted Beacon, Probe response frames, (Re)Association frames, and other management frames, including parameters to differentiate the latency sensitive traffic.

FIG. 7 illustrates an example of a latency sensitive traffic criterion element according to an embodiment of the present disclosure. The specification of the Latency Sensitive Traffic Criterion Element is described as follows. For the TS with the specific TEPEC parameters, if the following conditions are met the TS is identified as Latency Sensitive Traffic; or otherwise, the TS is not identified as Latency Sensitive Traffic.

Delay Bound specified in the Delay Bound field is less than or equal to the threshold for Delay Bound specified in the threshold for Delay Bound field.

Packet Delivery Ratio specified in the Packet Delivery Ratio field is greater than or equal to the threshold for Packet Delivery Ratio specified in the threshold for Packet Delivery Ratio field.

Maximum Jitter specified in the Maximum Jitter field is less than or equal to the threshold for Maximum Jitter specified in the threshold for Maximum Jitter field if the threshold for Maximum Jitter field of the Latency Sensitive Traffic Criterion Element is present and has valid value. This condition can be ignored if the threshold for Maximum Jitter field of the Latency Sensitive Traffic Criterion Element is not present or has no valid value.

Threshold for Delay Bound: The Threshold for Delay Bound field is 4 octets long and contains an unsigned integer that specifies the threshold for Delay Bound. The meaning of Delay Bound is the same as the definition of Delay Bound field in the TSPEC element from the current IEEE 802.11 standard.

Threshold for Packet Delivery Ratio: The Threshold for Packet Delivery Ratio field indicates the threshold for the percentage of packets that are expected to be delivered within the threshold for delay bound specified in the Threshold for Delay Bound field and its encoding is defined in Table 1.

**Table 1: Threshold for Packet Delivery Ratio field values**

| Value | Packet delivery ratio |
|---|---|
| 0 | Not specified |
| 1 | 99% |
| 2 | 99.9% |
| 3 | 99.99% |
| 4 | 99.999% |
| 5 | 99.9999% |
| 6-15 | Reserved |

Threshold for Maximum Jitter: The Threshold for Maximum Jitter field contains an unsigned integer that specifies the threshold for the maximum amount of time, in microseconds, allowed for Delay Variation to transport two sequential MSDU or A-MSDU belonging to the TS. The Threshold for Maximum Jitter field is optional.

Extended parameters for Restricted TWT Traffic Info field: The parameters of TS-based traffic information are added to the TWT Parameter Set field of TWT element for TS-based Restricted TWT operation. The parameters of TS-based traffic information can be based on TSID or TSPEC.

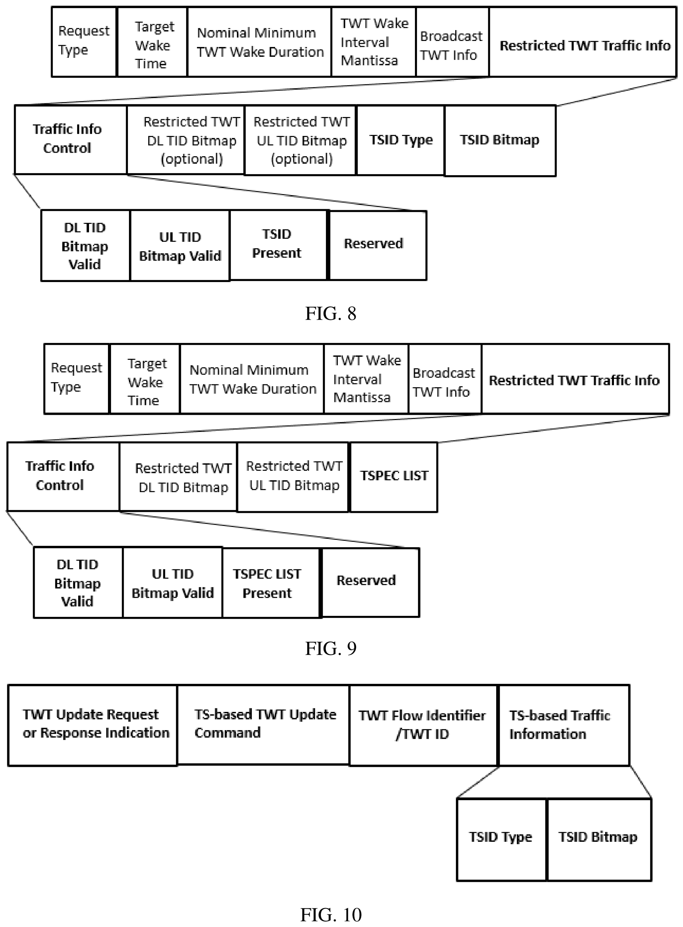

Broadcast TWT Parameter Set field with TSID-based parameters: FIG. 8 illustrates an example of a format of a broadcast target wake time (TWT) parameter set field with TSID-based parameters according to an embodiment of the present disclosure. The format of Broadcast TWT Parameter Set field with TSID-based parameters is illustrated in the FIG. 8. The TSID Present subfield indicates whether the TSID Type field and TSID Bitmap field are present. When the value of the TSID Present subfield is set to 1, TSID Type field and TSID Bitmap field are present, otherwise they are not present. TSID Type field and TSID Bitmap field are regarded as one type of TS-based traffic information field. TSID Type field and TSID Bitmap field specify which TSID(s) for latency sensitive traffic stream are represented. When the TSID Type subfield is set to "1", a value of 1 at bit position k in the bitmap indicates that TSID (k+8) for latency sensitive traffic stream is present. When the TSID Type subfield is set to "1", a value of 0 at bit position k in the bitmap indicates that TSID (k+8) for latency sensitive traffic stream is not present. When the TSID Type subfield is set to "0", a value of 1 at bit position k in the bitmap indicates that TSID k for latency sensitive traffic stream is present. When the TSID Type subfield is set to "0", a value of 0 at bit position k in the bitmap indicates that TSID k for latency sensitive traffic stream is not present.

Broadcast TWT Parameter Set field with TSPEC-based parameters: FIG. 9 illustrates an example of a TS-based TWT update field format with TSPEC-based parameters according to an embodiment of the present disclosure. The format of Broadcast TWT Parameter Set field with TSPEC-based parameters is illustrated in the FIG. 9. The TSPEC LIST Present subfield indicates whether the TSPEC LIST field is present. When the value is set to 1, the TSPEC LIST field is present, otherwise it is not present. TSPEC LIST field is also regarded as one type of TS-based traffic information field. TSPEC LIST field contains the one or more TSPEC elements for latency sensitive traffic stream.

R-TWT setup and update mechanisms to support TS operation:
R-TWT Setup and update mechanisms based on R-TWT element:
During the TS-based R-TWT agreement setup and update, a R-TWT requesting STA and/or a R-TWT responding AP can include the restricted TWT element where the TSID-based or TSPEC-based parameters indicate the TS(es) for latency sensitive traffic stream contained in the R-TWT Setup and update frames. The R-TWT requesting STA can transmit a frame with R-TWT element that contained a value of Request TWT, Suggest TWT or Demand TWT in the TWT Setup Command field and with TSID-based or TSPEC-based parameters. Upon receiving the frame, the R-TWT responding AP includes a value of Accept TWT, Alternate TWT, Dictate TWT or Reject TWT in the TWT Setup Command field of the response, which contains TSID-based or TSPEC-based parameters for TS-based traffic information. Table 2 illustrates the Broadcast TWT membership exchanges for TS-based R-TWT setup. The R-TWT scheduling AP can also send unsolicited TWT response to R-TWT requesting STA for TS operation. The unsolicited TWT response includes a value of Accept TWT, Alternate TWT, Dictate TWT or Reject TWT in the TWT Setup Command field of the response, which contains TSID-based or TSPEC-based parameters for TS-based traffic information.

**Table 2: Broadcast TWT membership exchanges:**

| TWT Setup Command field in an initiating frame | TWT Setup Command field in a response frame | Broadcast TWT Info field of R-TWT element | Condition after the completion of the exchange for the TS operation |
|---|---|---|---|
| Request TWT or Suggest TWT | Accept TWT | TSID-based or TSPEC-based parameters are present | The TS(es) with TSID values or TSPEC values indicated in the Broadcast TWT Info field of R-TWT element will be scheduled for transmission in the broadcast TWT schedule identified by the broadcast TWT ID and the TA of the response frame. |
| Request TWT or Suggest TWT or Demand TWT | Reject TWT | TSID-based or TSPEC-based parameters are present | When transmitted by a TWT scheduling AP, the TS(es) with TSID values or TSPEC values indicated in the Broadcast TWT Info field of R-TWT element will be withdrawn from the transmission in the broadcast TWT schedule identified by the broadcast TWT ID and the TA of the initiating frame. |

R-TWT update mechanism based on R-TWT update frame: During the TS-based R-TWT agreement update, a R-TWT requesting STA and a R-TWT responding AP can also exchange the R-TWT update frames containing the TSID-based or TSPEC-based parameters which indicate the TS(es) for latency sensitive traffic stream for TS operation.

TS-based TWT update frames: The TS-based TWT update frames include the frames for Request TWT ADDTS, Request TWT DELTS, Accept TWT ADDTS, Accept TWT DELTS, Reject TWT ADDTS, Reject TWT DELTS. The R-TWT update frames can adopt Action frame format. The Action field format and Action field values of the TWT update frames are illustrated in Table 3 and Table 4.

**Table 3: TS-based TWT update frame Action field format**

| Order | Information |
|---|---|
| 1 | Category |
| 2 | Action |
| 3 | TS-based TWT Update |

**Table 4: TS-based TWT update frame Action field values**

| Value | Meaning | Time Priority |
|---|---|---|
| ... | ... | ... |
| 6 | TWT Setup | No |
| ... | ... | ... |
| x | TS-based TWT Update | No |
| ... | ... | ... |
| 12-255 | Reserved | |

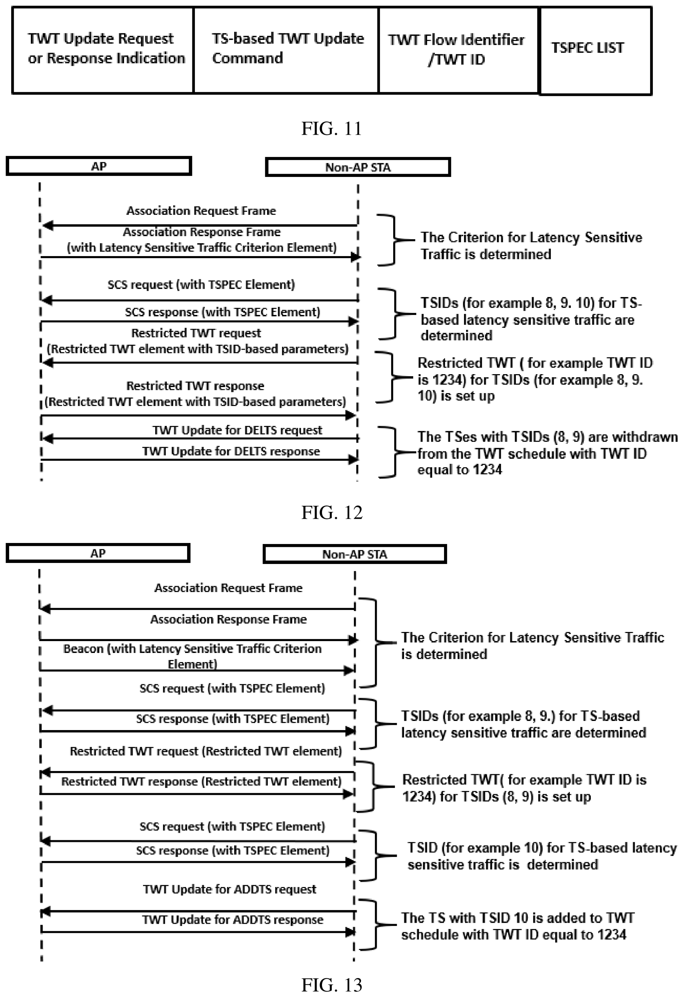

FIG. 10 is a schematic diagram illustrating an example of a TS-based TWT update field format with TSID-based parameters according to an embodiment of the present disclosure. FIG. 11 is a schematic diagram illustrating an example of TS-based TWT update field format with TSPEC-based parameters according to an embodiment of the present disclosure.

TWT Update Request or Response Indication: A STA that transmits a TWT element with the TWT Update Request or Response Indication subfield equal to 1 is a TWT requesting STA or TWT scheduled STA. Otherwise, it is a TWT responding STA or TWT scheduling AP.

TS-based TWT Update Command: The TWT Update for TS Operation Command subfield values indicate the type of TWT Update for TS Operation command, illustrated in the Table 5.

**Table 5: TS-based TWT Update Command field values:**

| TS-based TWT Update command field value | Command name | Description |
|---|---|---|
| 0 | Request TWT ADDTS | A TWT requesting or TWT scheduled STA requests to add the TS(es) with TSID values or TSPEC values indicated in TS-based TWT Update field in the TWT schedule identified by the TWT ID. |
| | | This command is valid if the TWT Update Request or Response Indication field is equal to 1; otherwise the command is not applicable. |
| 1 | Request TWT DELTS | A TWT requesting or TWT scheduled STA requests to withdraw the TS(es) with TSID values or TSPEC values indicated in TS-based TWT Update field from the TWT schedule identified by the TWT ID. |
| | | This command is valid if the TWT Update Request or Response Indication field is equal to 1; or otherwise, the command is not applicable. |
| 2 | Accept TWT ADDTS | A TWT responding STA or TWT scheduling AP accepts the TWT ADDTS request with TSID values or TSPEC values indicated in TS-based TWT Update field of Request TWT |
| | | ADDTS frame transmitted by the TWT requesting STA or TWT scheduled STA. This value is also used in unsolicited TWT responses. |
| | | This command is valid if the TWT Update Request or Response Indication is 0; otherwise not applicable. |
| 3 | Accept TWT DELTS | A TWT responding STA or TWT scheduling AP accepts the TWT DELTS request with the TSID values or TSPEC values indicated in TS-based TWT Update field of Request TWT DELTS frame transmitted by the TWT requesting STA or TWT scheduled STA. This value is also used in unsolicited TWT responses. |
| | | This command is valid if the TWT Update Request or Response Indication field is 0; otherwise not applicable. |
| 4 | Reject TWT ADDTS | A TWT responding STA or TWT scheduling AP rejects the TWT ADDTS request with the TSID values or TSPEC values indicated in TS-based TWT Update field of Request TWT ADDTS frame transmitted by the TWT requesting STA or TWT scheduled STA. |
| | | This command is valid if the TWT Update Request or Response Indication field is 0; otherwise not applicable. |
| 5 | Reject TWT DELTS | A TWT responding STA or TWT scheduling AP rejects the TWT DELTS request with the TSID values or TSPEC values indicated in TS-based TWT Update field of Request TWT DELTS frame transmitted by the TWT requesting STA or TWT scheduled STA. |
| | | This command is valid if the TWT Update Request or Response Indication field is 0; otherwise not applicable. |

### TWT ID:

Within a TWT Update TS Operation field that includes a TS-based TWT Update command value of Request TWT ADDTS or Request TWT DELTS, the TWT ID, if present, indicates a specific TWT for which the corresponding TS operation (TWT ADDTS or TWT DELTS) is requested to be done. Within a TWT Update TS Operation field that includes a TS-based TWT Update command value of Accept TWT ADDTS or Accept TWT DELTS, the TWT ID, if present, indicates a specific TWT for which the corresponding TS operation (TWT ADDTS or TWT DELTS) is accepted to be done as a response to the related request. Within a TWT Update TS Operation field that includes a TS-based TWT Update command value of Reject TWT ADDTS or Reject TWT DELTS, the TWT ID, if present, indicates a specific TWT for which the corresponding TS operation (TWT ADDTS or TWT DELTS) is rejected to be done as a response to the related request.

TS-based TWT Information frame: The Action field format and Action field values of the TS-based TWT Information frame are shown in Table 6 and Table 7. The TWT Information field adopts currently-specified WT Information field in IEEE 802.11. The TS-based Traffic information includes TSID-based parameters of TSID Type field and TSID Bitmap field, or TSPEC-based parameters of TSPEC LIST field. A TWT scheduled STA that receives a TS-based TWT Information frame that contains TS-based Traffic information considers the transmission of The TS(es) with TS-based Traffic information indicated in TSID-based parameters of TSID Type field and TSID Bitmap field, or TSPEC-based parameters of TSPEC LIST field of TWT Information frame in the broadcast TWT schedule as suspended and will resume the transmission of The TS(es) in broadcast TWT schedule at the first TWT that occurs not earlier than the Next TWT subfield value contained in the received TWT Information frame. A TWT scheduled STA that receives an acknowledgment in response to a TWT Information frame transmitted by the STA that contains TS-based Traffic information considers the transmission of The TS(es) with TS-based Traffic information indicated in TSID-based parameters of TSID Type field and TSID Bitmap field, or TSPEC-based parameters of TSPEC LIST field of TWT Information frame in the broadcast TWT schedule as suspended and will resume the transmission of The TS(es) in broadcast TWT schedule at the first TWT that occurs not earlier than the Next TWT subfield value contained in the received TWT Information frame.

**Table 6: TS-based TWT Information frame Action field format**

| Order | Information |
|---|---|
| 1 | Category |
| 2 | Action |
| 3 | TWT Information |
| 4 | TS-based Traffic information |

**Table 7: TS-based TWT Information frame Action field values**

| Value | Meaning | Time Priority |
|---|---|---|
| ... | ... | ... |
| 11 | TWT Information | No |
| ... | ... | ... |
| Y | TS-based TWT Information | No |
| ... | ... | ... |
| 12-255 | Reserved | |

### Embodiments:

### Case 1: R-TWT Setup based on R-TWT element with TSID-based parameters and R-TWT update using TS-based TWT update frames (I)

FIG. 10 illustrates an example of a restricted TWT (R-TWT) setup based on an R-TWT element with TSID-based parameters and an R-TWT update using TS-based TWT update frames according to an embodiment of the present disclosure. FIG. 11 illustrates an example of a R-TWT Setup based on R-TWT element with TSPEC -based parameters and R-TWT update using TS-based TWT update frames according to an embodiment of the present disclosure.

FIG. 12 illustrates an example of a restricted TWT (R-TWT) setup based on an R-TWT element with TSID-based parameters and an R-TWT update using TS-based TWT update frames according to an embodiment of the present disclosure. FIG. 12 illustrates that in some embodiments, the Non-AP STA sends the association request frame to the AP, and upon receiving the request the AP responses the association response frame with the Latency Sensitive Traffic Criterion Element to the Non-AP STA, which makes the Criterion for Latency Sensitive Traffic determined. Through the exchange of SCS request and SCS response with TSPEC Element between the AP and Non-AP STA, the TSIDs (for example 8, 9. 10) for TS-based latency sensitive traffic are determined. The TSes are identified as latency sensitive traffic based on the Criterion for Latency Sensitive Traffic. Through the exchange of Restricted TWT request (with the TWT Setup Command field value of Request TWT) and Restricted TWT response (with the TWT Setup Command field value of Accept TWT) between the AP and Non-AP STA, both of which carry the Restricted TWT element with TSID-based parameters, Restricted TWT (for example TWT ID is 1234) for the TSIDs (8, 9. 10) is set up. Through the exchange of R-TWT Update for DELTS request (with the TS-based TWT Update command value of Request TWT DELTS) and TWT Update for DELTS response (with the TS-based TWT Update command value of Accept TWT DELTS) between the AP and Non-AP STA, the TSes with the TSIDs (8, 9) are withdrawn from the TWT schedule with TWT ID equal to 1234.

### Case 2: R-TWT Setup based on R-TWT element with TSID-based parameters and R-TWT update using TS-based TWT update frames (II)

FIG. 13 illustrates an example of a R-TWT Setup based on R-TWT element with TSPEC -based parameters and R-TWT update using TS-based TWT update frames according to an embodiment of the present disclosure. FIG. 13 illustrates that, in some embodiments, the AP broadcasts the beacon with the Latency Sensitive Traffic Criterion Element to its associated non-AP STA, which makes the Criterion for Latency Sensitive Traffic determined. Through the exchange of SCS request and SCS response with TSPEC Element between the AP and Non-AP STA, the TSIDs (for example 8, 9) for TS-based latency sensitive traffic are determined. The TSes are identified as latency sensitive traffic based on the Criterion for Latency Sensitive Traffic. Through the exchange of Restricted TWT request (with the TWT Setup Command field value of Request TWT) and Restricted TWT response (with the TWT Setup Command field value of Accept TWT) between the AP and Non-AP STA, both of which carry the Restricted TWT element with TSID-based parameters, Restricted TWT (for example TWT ID is 1234) for the TSIDs (8, 9) is set up. Through the exchange of SCS request and SCS response with TSPEC Element between the AP and Non-AP STA, the TSID (for example 10) for TS-based latency sensitive traffic is determined. The TS is identified as latency sensitive traffic based on the Criterion for Latency Sensitive Traffic. Through the exchange of R-TWT Update for ADDTS request (with the TS-based TWT Update command value of Request TWT ADDTS) and TWT Update for ADDTS response (with the TS-based TWT Update command value of Accept TWT ADDTS) between the AP and Non-AP STA, the TS with the TSID (10) is added to the TWT schedule with TWT ID equal to 1234.

### Case 3: R-TWT Setup and update based on R-TWT element with TSID-based parameters (I)

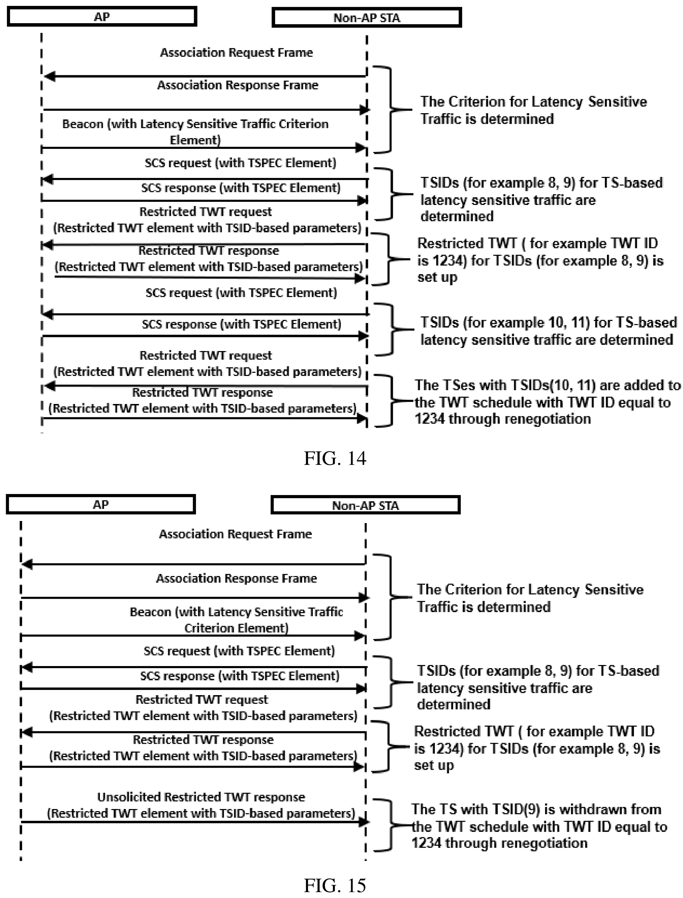

FIG. 14 illustrates an example of an R-TWT setup and update based on an R-TWT element with TSID-based parameters according to an embodiment of the present disclosure. FIG. 14 illustrates that, in some embodiments, the AP broadcasts the beacon with the Latency Sensitive Traffic Criterion Element to its associated non-AP STA, which makes the Criterion for Latency Sensitive Traffic determined. Through the exchange of SCS request and SCS response with TSPEC Element between the AP and Non-AP STA, the TSIDs (for example 8, 9) for TS-based latency sensitive traffic are determined. The TSes are identified as latency sensitive traffic based on the Criterion for Latency Sensitive Traffic. Through the exchange of Restricted TWT request (with the TWT Setup Command field value of Request TWT) and Restricted TWT response (with the TWT Setup Command field value of Accept TWT) between the AP and Non-AP STA, both of which carry the Restricted TWT element with TSID-based parameters, Restricted TWT (for example TWT ID is 1234) for the TSIDs (8, 9) is set up. Through the exchange of SCS request and SCS response with TSPEC Element between the AP and Non-AP STA, the TSIDs (for example 10, 11) for TS-based latency sensitive traffic is determined. The TSes are identified as latency sensitive traffic based on the Criterion for Latency Sensitive Traffic. Through the exchange of Restricted TWT request (with the TWT Setup Command field value of Request TWT) and Restricted TWT response (with the TWT Setup Command field value of Accept TWT) between the AP and Non-AP STA, both of which carry the Restricted TWT element with TSID-based parameters, the TSes with the TSIDs(10, 11) are added to the TWT schedule with TWT ID equal to 1234 by renegotiation.

### Case 4: R-TWT Setup and update based on R-TWT element with TSID-based parameters (II)

FIG. 15 illustrates an example of an R-TWT setup and update based on an R-TWT element with TSID-based parameters according to another embodiment of the present disclosure. FIG. 15 illustrates that, in some embodiments, AP broadcasts the beacon with the Latency Sensitive Traffic Criterion Element to its associated non-AP STA, which makes the Criterion for Latency Sensitive Traffic determined. Through the exchange of SCS request and SCS response with TSPEC Element between the AP and Non-AP STA, the TSIDs (for example 8, 9) for TS-based latency sensitive traffic are determined. The TSes are identified as latency sensitive traffic based on the Criterion for Latency Sensitive Traffic. Through the exchange of Restricted TWT request (with the TWT Setup Command field value of Request TWT) and Restricted TWT response (with the TWT Setup Command field value of Accept TWT) between the AP and Non-AP STA, both of which carry the Restricted TWT element with TSID-based parameters, Restricted TWT (for example TWT ID is 1234) for the TSIDs (8, 9) is set up. The AP sends the unsolicited Restricted TWT response (with the TWT Setup Command field value of Reject TWT) to the non-AP STA, the TS with the TSID (9) is withdrawn from the TWT schedule with TWT ID equal to 1234 by renegotiation.

### Case 5: R-TWT Setup based on R-TWT element with TSPEC-based parameters and R-TWT update using TS-based TWT update frames

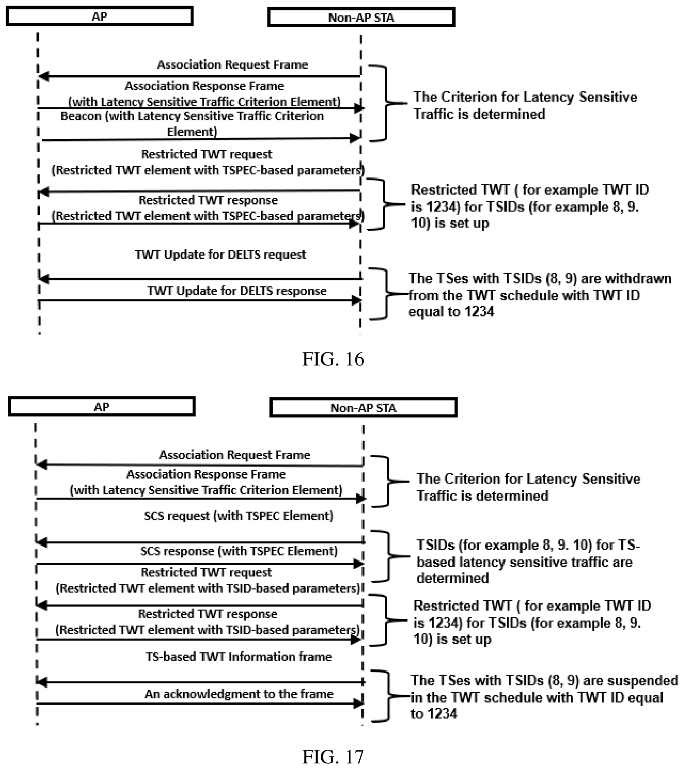

FIG. 16 illustrates an example of an R-TWT setup based on an R-TWT element with TSPEC-based parameters and an R-TWT update using TS-based TWT update frames according to an embodiment of the present disclosure. FIG. 16 illustrates that, in some embodiments, the AP broadcasts the beacon with the Latency Sensitive Traffic Criterion Element to its associated non-AP STA, which makes the Criterion for Latency Sensitive Traffic determined. Through the exchange of Restricted TWT request (with the TWT Setup Command field value of Request TWT) and Restricted TWT response (with the TWT Setup Command field value of Accept TWT) between the AP and Non-AP STA, both of which carry the Restricted TWT element with TSPEC-based parameters, Restricted TWT (for example TWT ID is 1234) for the TSIDs (8, 9) is set up. Through the exchange of R-TWT Update for DELTS request (with the TS-based TWT Update command value of Request TWT DELTS) and TWT Update for DELTS response (with the TS-based TWT Update command value of Accept TWT DELTS) between the AP and Non-AP STA, the TSes with the TSIDs (8, 9) are withdrawn from the TWT schedule with TWT ID equal to 1234.

### Case 6: R-TWT Setup based on R-TWT element with TSID-based parameters and R-TWT update using TS-based TWT Information frame

FIG. 17 illustrates an example of an R-TWT setup based on an R-TWT element with TSID-based parameters and an R-TWT update using a TS-based TWT information frame according to an embodiment of the present disclosure. FIG. 17 illustrates that, in some embodiments, AP broadcasts the beacon with the Latency Sensitive Traffic Criterion Element to its associated non-AP STA, which makes the Criterion for Latency Sensitive Traffic determined. Through the exchange of SCS request and SCS response with TSPEC Element between the AP and Non-AP STA, the TSIDs (for example 8, 9) for TS-based latency sensitive traffic are determined. The TSes are identified as latency sensitive traffic based on the Criterion for Latency Sensitive Traffic. Through the exchange of Restricted TWT request (with the TWT Setup Command field value of Request TWT) and Restricted TWT response (with the TWT Setup Command field value of Accept TWT) between the AP and Non-AP STA, both of which carry the Restricted TWT element with TSID-based parameters, Restricted TWT (for example TWT ID is 1234) for the TSIDs (8, 9) is set up. The non-AP STA that receives an acknowledgment in response to the TS-based TWT Information frame transmitted by the STA that contains TS-based Traffic information which indicates the TSIDs of 8 and 9, suspends the TSes with TSIDs (8, 9) in the TWT schedule with TWT ID equal to 1234.

Restricted TWT and TS-based operation for the latency sensitive traffic are two important functions specified in IEEE 802.11be, which is the next-generation Wi-Fi standard. Some of the solutions or rules described in some embodiments of the present disclosure will be probably included in 802.11bf standard, and then be adopted in the Wi-Fi AP and mobile phones.

Commercial interests for some embodiments are as follows. 1. Solving issues in the prior art. 2. Supporting a TS operation for latency sensitive traffic. 3. Providing a good communication performance. 4. Providing a high reliability. 5. Some embodiments of the present disclosure are used by chipset vendors, communication system development vendors, automakers including cars, trains, trucks, buses, bicycles, moto-bikes, helmets, and etc., drones (unmanned aerial vehicles), smartphone makers, communication devices for public safety use, AR/VR device maker for example gaming, conference/seminar, education purposes. Some embodiments of the present disclosure are a combination of "techniques/processes" that can be adopted in communication specification and/ or communication standards such as IEEE specification and/or to standards create an end product. Some embodiments of the present disclosure propose technical mechanisms.

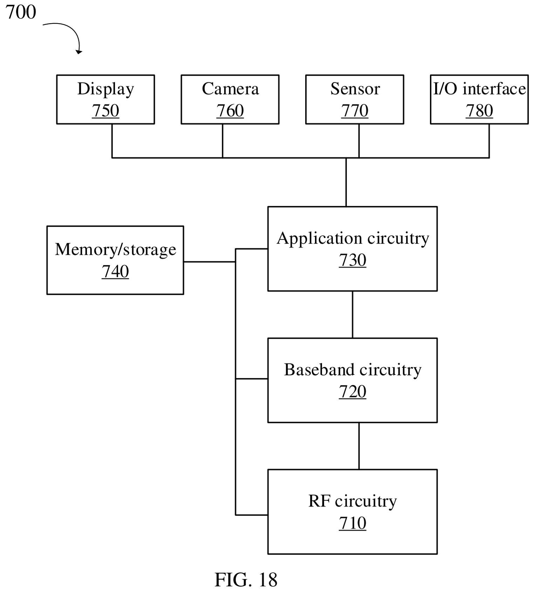

FIG. 18 is a block diagram of an example system 700 for wireless communication according to an embodiment of the present disclosure. Embodiments described herein may be implemented into the system using any suitably configured hardware and/or software. FIG. 18 illustrates the system 700 including a radio frequency (RF) circuitry 710, a baseband circuitry 720, an application circuitry 730, a memory/storage 740, a display 750, a camera 760, a sensor 770, and an input/output (I/O) interface 780, coupled with each other at least as illustrated. The application circuitry 730 may include a circuitry such as, but not limited to, one or more single-core or multi-core processors. The processors may include any combination of general-purpose processors and dedicated processors, such as graphics processors, application processors. The processors may be coupled with the memory/storage and configured to execute instructions stored in the memory/storage to enable various applications and/or operating systems running on the system.

The baseband circuitry 720 may include circuitry such as, but not limited to, one or more single-core or multi-core processors. The processors may include a baseband processor. The baseband circuitry may handle various radio control functions that enables communication with one or more radio networks via the RF circuitry. The radio control functions may include, but are not limited to, signal modulation, encoding, decoding, radio frequency shifting, etc. In some embodiments, the baseband circuitry may provide for communication compatible with one or more radio technologies. For example, in some embodiments, the baseband circuitry may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry is configured to support radio communications of more than one wireless protocol may be referred to as multi-mode baseband circuitry.

In various embodiments, the baseband circuitry 720 may include circuitry to operate with signals that are not strictly considered as being in a baseband frequency. For example, in some embodiments, baseband circuitry may include circuitry to operate with signals having an intermediate frequency, which is between a baseband frequency and a radio frequency. The RF circuitry 710 may enable communication with wireless networks using modulated electromagnetic radiation through a non-solid medium. In various embodiments, the RF circuitry may include switches, filters, amplifiers, etc. to facilitate the communication with the wireless network. In various embodiments, the RF circuitry 710 may include circuitry to operate with signals that are not strictly considered as being in a radio frequency. For example, in some embodiments, RF circuitry may include circuitry to operate with signals having an intermediate frequency, which is between a baseband frequency and a radio frequency.

In various embodiments, the transmitter circuitry, control circuitry, or receiver circuitry discussed above with respect to the AP or STA may be embodied in whole or in part in one or more of the RF circuitry, the baseband circuitry, and/or the application circuitry. As used herein, "circuitry" may refer to, be part of, or include an Application Specific Integrated Circuit (ASIC), an electronic circuit, a processor (shared, dedicated, or group), and/or a memory (shared, dedicated, or group) that execute one or more software or firmware programs, a combinational logic circuit, and/or other suitable hardware components that provide the described functionality. In some embodiments, the electronic device circuitry may be implemented in, or functions associated with the circuitry may be implemented by, one or more software or firmware modules. In some embodiments, some or all of the constituent components of the baseband circuitry, the application circuitry, and/or the memory/storage may be implemented together on a system on a chip (SOC). The memory/storage 740 may be used to load and store data and/or instructions, for example, for system. The memory/storage for one embodiment may include any combination of suitable volatile memory, such as dynamic random access memory (DRAM)), and/or non-volatile memory, such as flash memory.

In various embodiments, the I/O interface 780 may include one or more user interfaces designed to enable user interaction with the system and/or peripheral component interfaces designed to enable peripheral component interaction with the system. User interfaces may include, but are not limited to a physical keyboard or keypad, a touchpad, a speaker, a microphone, etc. Peripheral component interfaces may include, but are not limited to, a non-volatile memory port, a universal serial bus (USB) port, an audio jack, and a power supply interface. In various embodiments, the sensor 770 may include one or more sensing devices to determine environmental conditions and/or location information related to the system. In some embodiments, the sensors may include, but are not limited to, a gyro sensor, an accelerometer, a proximity sensor, an ambient light sensor, and a positioning unit. The positioning unit may also be part of, or interact with, the baseband circuitry and/or RF circuitry to communicate with components of a positioning network, e.g., a global positioning system (GPS) satellite.

In various embodiments, the display 750 may include a display, such as a liquid crystal display and a touch screen display. In various embodiments, the system 700 may be a mobile computing device such as, but not limited to, a laptop computing device, a tablet computing device, a netbook, an ultrabook, a smartphone, an AR/VR glasses, etc. In various embodiments, system may have more or less components, and/or different architectures. Where appropriate, methods described herein may be implemented as a computer program. The computer program may be stored on a storage medium, such as a non-transitory storage medium.

A person having ordinary skill in the art understands that each of the units, algorithm, and steps described and disclosed in the embodiments of the present disclosure are realized using electronic hardware or combinations of software for computers and electronic hardware. Whether the functions run in hardware or software depends on the condition of application and design requirement for a technical plan. A person having ordinary skill in the art can use different ways to realize the function for each specific application while such realizations should not go beyond the scope of the present disclosure. It is understood by a person having ordinary skill in the art that he/she can refer to the working processes of the system, device, and unit in the above-mentioned embodiment since the working processes of the above-mentioned system, device, and unit are basically the same. For easy description and simplicity, these working processes will not be detailed.

It is understood that the disclosed system, device, and method in the embodiments of the present disclosure can be realized with other ways. The above-mentioned embodiments are exemplary only. The division of the units is merely based on logical functions while other divisions exist in realization. It is possible that a plurality of units or components are combined or integrated in another system. It is also possible that some characteristics are omitted or skipped. On the other hand, the displayed or discussed mutual coupling, direct coupling, or communicative coupling operate through some ports, devices, or units whether indirectly or communicatively by ways of electrical, mechanical, or other kinds of forms. The units as separating components for explanation are or are not physically separated. The units for display are or are not physical units, that is, located in one place or distributed on a plurality of network units. Some or all of the units are used according to the purposes of the embodiments. Moreover, each of the functional units in each of the embodiments can be integrated in one processing unit, physically independent, or integrated in one processing unit with two or more than two units.

If the software function unit is realized and used and sold as a product, it can be stored in a readable storage medium in a computer. Based on this understanding, the technical plan proposed by the present disclosure can be essentially or partially realized as the form of a software product. Or, one part of the technical plan beneficial to the conventional technology can be realized as the form of a software product. The software product in the computer is stored in a storage medium, including a plurality of commands for a computational device (such as a personal computer, a server, or a network device) to run all or some of the steps disclosed by the embodiments of the present disclosure. The storage medium includes a USB disk, a mobile hard disk, a read-only memory (ROM), a random access memory (RAM), a floppy disk, or other kinds of media capable of storing program codes.

While the present disclosure has been described in connection with what is considered the most practical and preferred embodiments, it is understood that the present disclosure is not limited to the disclosed embodiments but is intended to cover various arrangements made without departing from the scope of the broadest interpretation of the appended claims.

## Claims

1. A wireless communication method, comprising:
determining, by an access point, AP, a restricted target wake time, TWT, setup and/or one or more update mechanisms to support a TS operation, wherein the restricted TWT setup and/or the one or more update mechanisms are based on a restricted TWT element, wherein the restricted TWT element comprises a request type field, a TWT field, a nominal minimum TWT wake duration field, a TWT wake interval mantissa field, a broadcast TWT information field, and a restricted TWT traffic information field.

2. The wireless communication method of claim 1, wherein the restricted TWT traffic information field comprises a traffic information control field, a restricted TWT traffic stream identifier, TSID, type field, and a TSID bitmap field.

3. The wireless communication method of claim 2, wherein the restricted TWT traffic information field further comprises a restricted TWT downlink, DL, traffic identifier, TID, bitmap field and/or a restricted TWT uplink, UL, TID bitmap field.

4. The wireless communication method of claims 2 or 3, wherein the traffic information control field comprises a DL TID bitmap valid subfield, a UL TID bitmap valid subfield, a TSID present subfield, and a reserved subfield.

5. The wireless communication method of any one of claims 1 to 4, further comprising:
determining, by the AP, extended parameters for the restricted TWT traffic information field.

6. The wireless communication method of claim 5, wherein the extended parameters for the restricted TWT traffic information field comprise a broadcast TWT parameter set field with TSID-based parameters.

7. The wireless communication method of claim 6, wherein the broadcast TWT parameter set field with the TSID-based parameters comprise the TSID present subfield configured to indicate whether the TSID type field and the TSID bitmap field are present.

8. A wireless communication method, comprising:
determining, by a station, STA, a restricted TWT setup and/or one or more update mechanisms to support a TS operation, wherein the restricted TWT setup and/or the one or more update mechanisms are based on a restricted TWT element, wherein the restricted TWT element comprises a request type field, a TWT field, a nominal minimum TWT wake duration field, a TWT wake interval mantissa field, a broadcast TWT information field, and a restricted TWT traffic information field.

9. The wireless communication method of claim 8, wherein the restricted TWT traffic information field comprises a traffic information control field, a restricted TWT traffic stream identifier, TSID, type field, and a TSID bitmap field.

10. The wireless communication method of claim 9, wherein the restricted TWT traffic information field further comprises a restricted TWT downlink, DL, traffic identifier, TID, bitmap field and/or a restricted TWT uplink, UL, TID bitmap field.

11. The wireless communication method of claims 9 or 10, wherein the traffic information control field comprises a DL TID bitmap valid subfield, a UL TID bitmap valid subfield, a TSID present subfield, and a reserved subfield.

12. The wireless communication method of any one of claims 8 to 11, further comprising:
determining, by the STA, extended parameters for the restricted TWT traffic information field.

13. The wireless communication method of claim 12, wherein the extended parameters for the restricted TWT traffic information field comprise a broadcast TWT parameter set field with TSID-based parameters.

14. An access point, AP, comprising:
a memory;
a transceiver; and
a processor coupled to the memory and the transceiver;
wherein the processor is configured to perform the method of any one of claims 1 to 7.

15. A station, STA, comprising:
a memory;
a transceiver; and
a processor coupled to the memory and the transceiver;
wherein the processor is configured to perform the method of any one of claims 8 to 13.
